# EUROPEAN PATENT SPECIFICATION

(11) **EP 3 370 579 B1**
(45) Date of publication and mention of the grant of the patent: **12.06.2019**
(21) Application number: 16788540.9
(22) Date of filing: 01.11.2016
(51) Int. Cl.: A47J 31/06, A47J 31/10, A47J 31/44

(54) **A COFFEE MACHINE FOR BREWING TURKISH COFFEE**
KAFFEEMASCHINE ZUM BRÜHEN VON TÜRKISCHEM KAFFEE
MACHINE À CAFÉ POUR INFUSION DE CAFÉ TURC

(30) Priority: 06.11.2015 TR 201513944
(43) Date of publication of application: 12.09.2018
(73) Proprietor: Arçelik Anonim Sirketi, 34950 Istanbul (TR)
(72) Inventor: AYAROGLU, Emre, 34950 Istanbul (TR); GERZELI, Ismail, 34950 Istanbul (TR); CENGIZ, Osman, 34950 Istanbul (TR); KARAAGAC, Emre, 34950 Istanbul (TR); GUNDUZ, Nihat, 34950 Istanbul (TR); KARTAL, Resul, 34950 Istanbul (TR)
(86) International application number: PCT/EP2016/076269
(87) International publication number: WO 2017/076820

(56) References cited:
- EP-A1- 1 029 485
- WO-A1-2016/025992
- WO-A2-2013/098291
- US-A- 4 957 632
- US-A1- 2010 206 176
- US-A1- 2013 160 656

## Description

The present invention relates to a coffee machine suitable for use with a single-use capsule containing coffee.

Use of single-use capsules containing coffee in coffee machines is known. In this type of machines, the capsule is placed to a housing disposed in the upper portion of the body of the machine, and the coffee in the capsule is transferred to a brewing chamber that is disposed in the lower portion of the housing by the capsule being blown/opened. The coffee in the brewing chamber is mixed with water and heated by a heater preferably disposed under the brewing chamber. The brewed coffee can be automatically transferred to a cup or can be transferred by the user to a cup. In the coffee machines where the coffee is automatically transferred to a cup, the brewing chamber where the coffee is brewed is rotated and the coffee can be transferred to the cup. Use of an extra movement mechanism is required to rotate the brewing chamber. When transfer is made by means of a valve disposed at the bottom of the brewing chamber, foam of the coffee cannot be transferred to the cup. With valves having a complex geometric structure, the foam remains on the valve and drying of the foam on the components of the valve adversely affects the liquid transfer. Also ease of cleaning of the valve is important in terms of the user satisfaction.

In the state of the art European Patent Application No. EP1029485, a coffee filter holder having in its bottom part an outlet orifice for the discharge of a filtered infusion, and a device for closing off the outlet orifice is disclosed.

In the state of the art International Patent Application No. WO2011007266, a coffee machine using capsules is disclosed.

In the state of the art Turkish Patent Application No. TR200100549, a coffee machine using capsules is disclosed. Document US-A1-2013/0160656 discloses another example of coffee machine showing the features of the preamble of claim 1.

The aim of the present invention is the realization of a coffee machine where the coffee is transferred along with its foam to the cup.

The coffee machine realized in order to attain the aim of the present invention, explicated in the claims, comprises a valve having a support that is disposed on the brewing chamber where the coffee is brewed, a piston moving up and down within the support; a stem that extends from the pouring port where the coffee is decanted from the brewing chamber and that can move in the same direction with the piston as piston and a plug that bears against the pouring port as connected to the end of the stem and provides the closing of the pouring port. The valve opens and closes by triggering of an actuator disposed on the body of the coffee machine. By means of the present invention, the coffee in the brewing chamber is transferred via the stem directly from the pouring port into the cup as the plug opens the pouring port. By transferring the coffee by means of the valve which has such a simple geometry, in other words, by transferring of the coffee without meandering through narrow pathways, the foam of the coffee is also transferred to the cup.

In an embodiment of the present invention, the valve is kept in closed position during the brewing process as a default setting by means of a spring with one end connected to the support and the other end to the piston. The spring, by taking force from the support, in other words, by bearing upon the support, pushes the piston downward and enables the plug to close the pouring port.

In another embodiment of the present invention, the valve has a piston extending in parallel with the support in the vertical direction. According to the present invention, a connection arm provides the connection between the piston and the stem. In this embodiment, shifting of the valve between the open and closed positions can be triggered from outside the brewing chamber by means of an actuator disposed on the coffee machine. By means of the upward movement of the piston, the connection arm moves the stem upward, and by means of the upward movement of the stem, the plug opens the pouring port. The valve is shifted to the closed position by reversely carrying out the movement of shifting to the open position.

In another embodiment of the present invention, the plug is produced from silicon in order to ensure an efficient sealing and cost advantage. Thanks to the resiliency of the silicon, the pouring port is tightly sealed and the coffee is prevented from dripping from the pouring port when the valve is in the closed position.

According to the present invention, the coffee is properly transferred to the cup by means of a pendant which extends from the juncture of the stem and the connection arm downward in the vertical direction. When the valve is shifted to the closed position, any coffee remaining on the stem is enabled to drip via the pendant into the cup. In this embodiment, a pathway through which the coffee can move is formed.

In another embodiment of the present invention, by means of barriers positioned on the connection arm so as to extend in the vertical direction, the coffee flowing along the stem is prevented from moving through the connection arm by the effect of adhesion. Upon reaching the barrier, the coffee moving through the connection arm begins to move on the barrier and drip into the cup.

In another embodiment of the present invention, a flow regulator in the form of a plate extending along the stem and that regulates the flow of the coffee, in other words, provides the transfer of the coffee directly into the cup without splashing around is provided. In another version of this embodiment, the flow regulator extends up to the lowest point of the pendant. By means of this embodiment, when the valve is closed, any coffee remaining on the stem is forced to drip over the pendant or the flow regulator.

In another embodiment of the present invention, the connection arm is in the form of a spring (bow) which is connected to the stem preferably from the midpoint thereof. By means of this embodiment, the coffee pouring out from the pouring port is transferred to the cup in the form of a film strip.

In another embodiment of the present invention, a decorative cover, which is disposed in front of the brewing chamber and which prevents the valve elements such as support, connection arm and spring from being seen, is used. In another version of this embodiment, the support and the decorative cover are produced as integrated.

In another embodiment of the present invention, the support is produced so as to be detachable from the brewing chamber.

In the coffee machine of the present invention, by using a poppet type valve, which is widely used in the state of the art and has a simple structure, transfer of the coffee together with its foam to the cup is provided. Moreover, by disposing the elements constituting the valve outside the brewing chamber, cleaning process is facilitated. By means of the unique design of the stem and the connection arm on the valve, the coffee is transferred together with its foam into the cup effectively without splashing outside the cup.

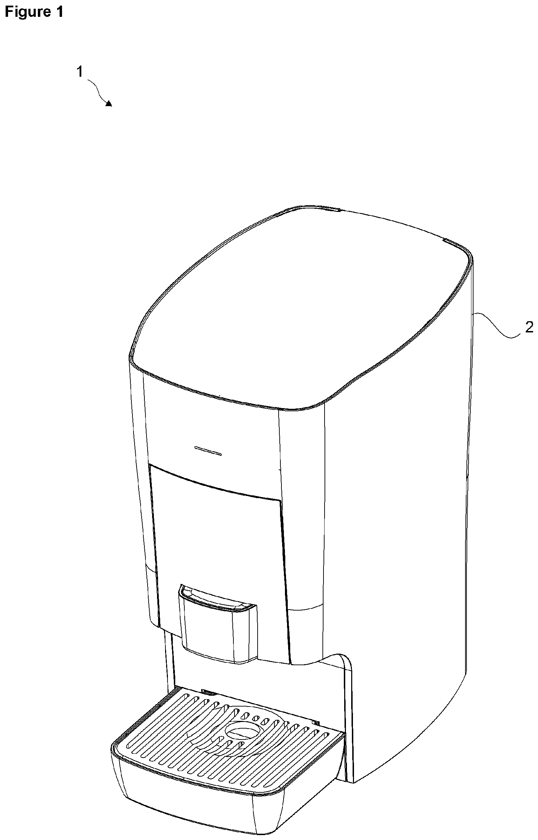

The coffee machine realized in order to attain the aim of the present invention is illustrated in the attached figures where
Figure 1 - is the perspective view of a coffee machine.

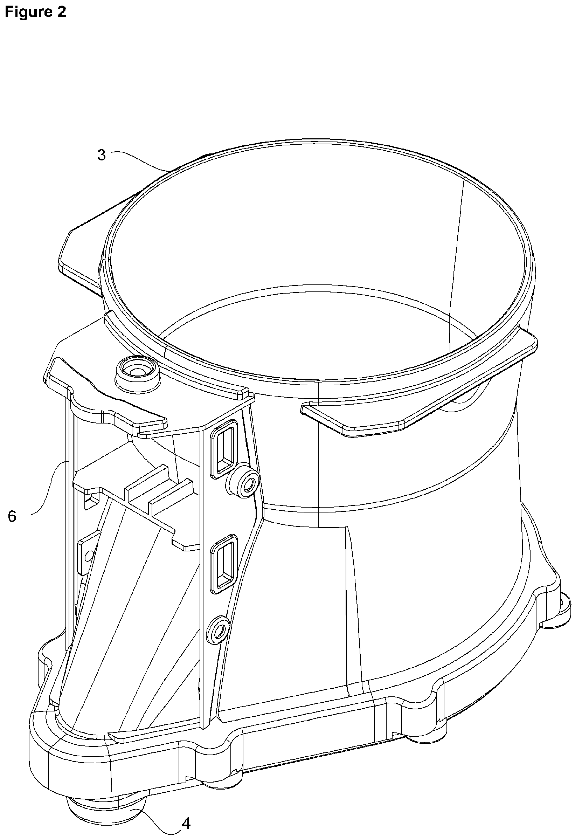

Figure 2 - is a perspective view of a brewing chamber in an embodiment of the present invention.

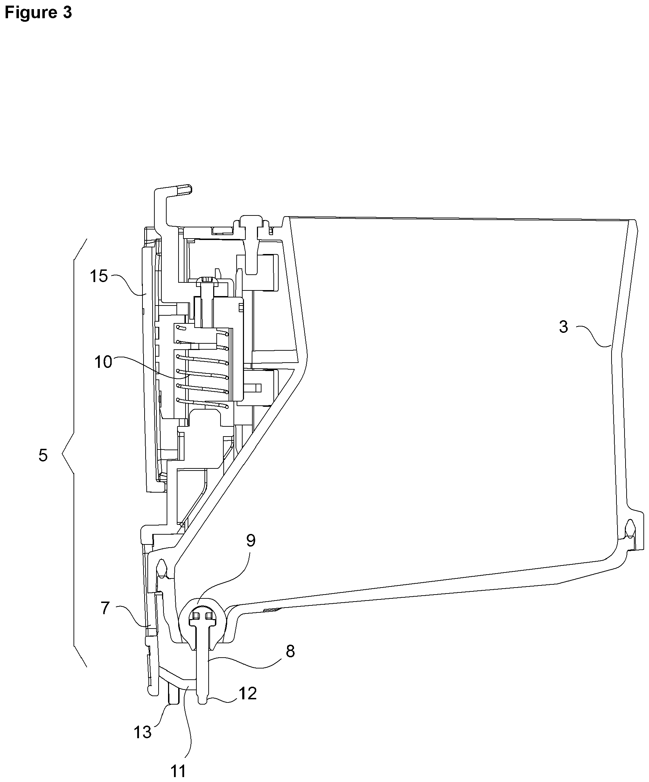

Figure 3 - is the sideways schematic view of the brewing chamber when the valve is in the closed position in another embodiment of the present invention.

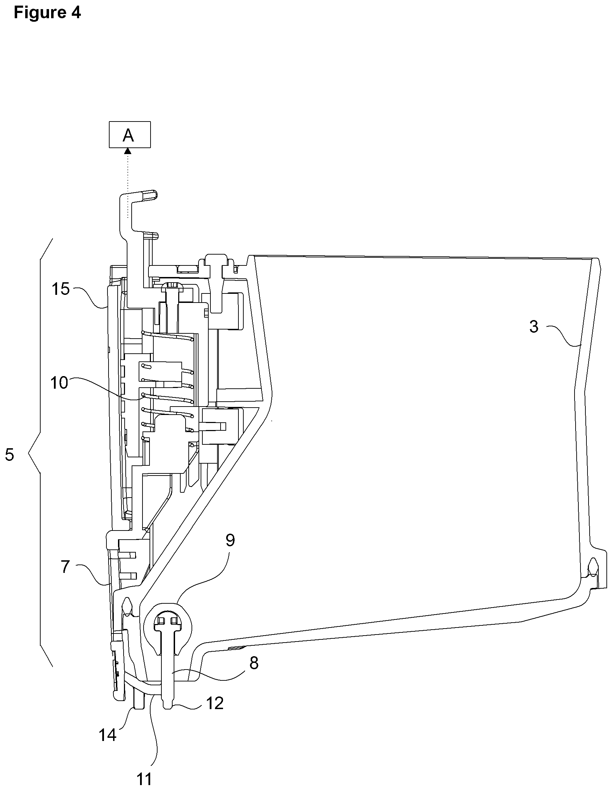

Figure 4 - is the sideways schematic view of the brewing chamber when the valve is in the open position in another embodiment of the present invention.

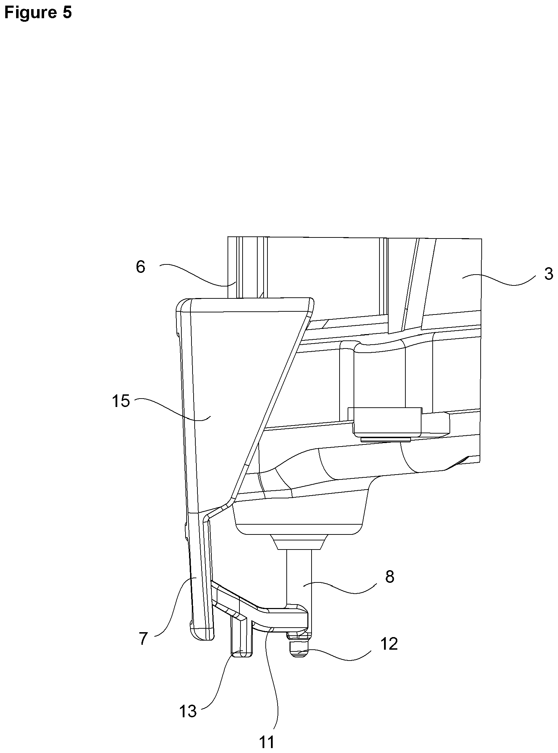

Figure 5 - is the partial perspective view of the brewing chamber in another embodiment of the present invention.

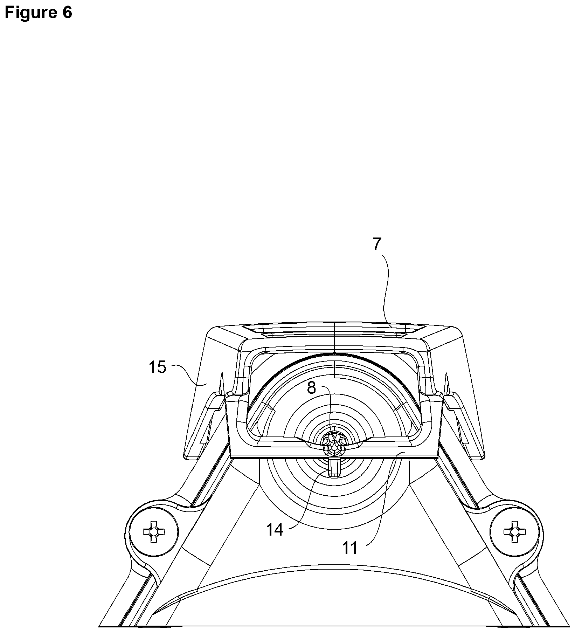

Figure 6 - is the bottom partial schematic view of the brewing chamber in another embodiment of the present invention.

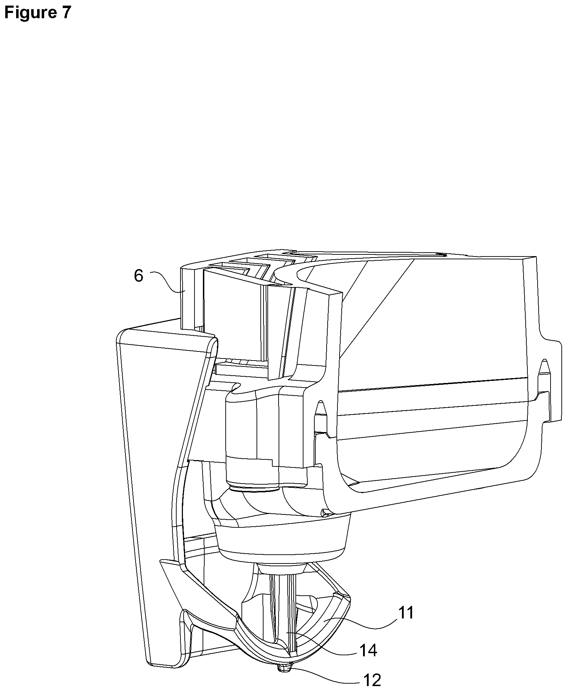

Figure 7 - is the sideways partial perspective view of the brewing chamber in another embodiment of the present invention.

The elements and steps in the figures are numbered as follows:
- 1.: Coffee machine
- 2.: Body
- 3.: Brewing chamber
- 4.: Pouring port
- 5.: Valve
- 6.: Support
- 7.: Piston
- 8.: Stem
- 9.: Plug
- 10.: Spring
- 11.: Connection arm
- 12.: Pendant
- 13.: Barrier
- 14.: Flow regulator
- 15.: Decorative cover
- a.: Actuator

The coffee machine (1) comprises a body (2), a brewing chamber (3) disposed within the body (2) and wherein the coffee is mixed with water and brewed, and a pouring port (4) disposed at the base of the brewing chamber (3).

In the coffee machine (1), the coffee is transferred to the brewing chamber (3) and then the water is transferred from a water tank (not shown in the figures) disposed within the body (2), and the coffee mixed with water is brewed by heating by means of a heater (not shown in the figures). With the opening of the pouring port (4), the brewed coffee is transferred to a cup.

The coffee machine (1) of the present invention comprises a valve (5) having a support (6) that is fixed on the external lateral surface of the brewing chamber (3), a piston (7) that is borne in the support (6) so as to move in the vertical direction, a stem (8) that is connected to the lower end of the piston (7) and that extends perpendicularly from the pouring port (4) therein and a plug (9) that is disposed on the end of the stem (8) in the brewing chamber (3) and that is seated onto the pouring port (4) during the brewing process, the valve (5) providing the opening of the pouring port (4) and the decanting of the brewed coffee by moving the plug (9) upward with the piston (7) and the stem (8) connected to the piston (7) by means of an actuator (A) at the end of the brewing process. In the coffee machine (1) of the present invention, by positioning the elements of the valve (5) other than the plug (9), that is, the support (6), the piston (7) and the stem (8) outside the brewing chamber (3), the coffee brewed in the brewing chamber (3) is transferred from the pouring port (4) together with its foam into the cup. The valve (5) shifts to the open position as the piston (7) is pulled upward by means of the actuator (A) disposed on the body (2) and thus the stem (8) connected to the piston (7) moves upward and the plug (9) connected to the end of the stem (8) also moves upward and away from the pouring port (4). As the actuator (A) pushes the piston (7) downward, the plug (9) moves downward and bears against the pouring port (4), thus closing the pouring port (4). By means of the valve (5) having a structure which is similar to its derivative known as the poppet valve in the state of the art, the pouring port (4) can be opened widely and the coffee can be easily transferred into the cup. Thus, the coffee can be transferred together with its foam into the cup and the cleaning of the valve (5) is facilitated.

In an embodiment of the present invention, the valve (5) comprises a spring (10) with one end connected to the piston (7) and the other end to the support (6), that enables the plug (9) to apply pressure and be seated onto the pouring port (4) throughout the brewing process. The spring (10) bears against the support (6) fixed to the brewing chamber (3), thus pushing the piston (7) downward in the vertical direction. As the piston (7) is pushed by the spring (10) downward, the plug (9) is also pushed downward, in other words, bears against the pouring port (4), thereby providing that the valve (5) is in the closed position as default.

According to the present invention, the valve (5) comprises a connection arm (11) that provides the connection between the lower end of the piston (7) and the stem (8). In this embodiment, the piston (7) and the stem (8) extend in parallel with each other and are connected to each other by means of the connection arm (11). By means of the connection arm (11), movements of the piston (7) upward and downward are transmitted identically to the stem (8).

In another embodiment of the present invention, the valve (5) comprises the plug (9) in the form of a sphere and preferably produced from silicon. By producing the plug (9) from silicon, which is an elastic material providing cost advantage, any leakage from the pouring port (4) in the closed position of the valve (5) where the piston (7) pulls the plug (9) downward is prevented.

According to the present invention, the valve (5) comprises a pendant (12) that extends downward in the direction of the flow at the juncture of the stem (8) and the connection arm (11) and provides smooth flow of the liquid. The last remaining coffee flowing from the pouring port (4) when the transfer of coffee is about to be completed is enabled to drip via the pendant (12). In other words, the coffee flowing from the pouring port (4) is forced to flow via the stem (8) and drip from the pendant (12).

In another embodiment of the present invention, the valve (5) comprises at least one barrier (13) that is disposed on the connection arm (11) and that extends in the vertical direction so as to prevent the liquid from moving on the connection arm (11). Coffee pours/flows also on the connection arm (11) during the transfer of the coffee. In this case, the coffee moves over the connection arm (11) by the effect of cohesion and causes the coffee to drip outside the cup. By means of the barrier (13), the coffee is prevented from moving over the connection arm (11) and the coffee is enabled to drip into the cup over the barrier (13).

In another embodiment of the present invention, the valve (5) comprises a flow regulator (14) in the form of a plate, that extends partly along the stem (8). By means of the flow regulator (14), a pathway along which the coffee can move is created and by means of the flow regulator (14) being in the form of a plate, the surface area onto which the coffee can hold while flowing is increased. Thus, the coffee is enabled to be properly transferred toward the cup. In another version of this embodiment, the lowest level of the flow regulator (14) extends up to the lowest level of the pendant (12). By means of this embodiment, the coffee is enabled to drip both over the pendant (12) and the flow regulator (14).

In another embodiment of the present invention, the connection arm (11) has a curved structure. In this embodiment, the coffee pouring from the pouring port (4) flows along the stem (8) and reaches the connection arm (11) and the coffee is enabled to flow without losing its foam over the connection arm (11) without moving on the curved connection arm (11). By means of the curved connection of the connection arm (11) to the stem (8), the coffee flows over the connection arm (11) in the form of a film strip.

In another embodiment of the present invention, the valve (5) comprises at least one decorative cover (15) that is disposed in front of the support (6) and that prevents the stem (8), the spring (10) and the connection arm (11) from being seen. In this embodiment, the user is prevented from seeing the valve (5) components. In another version of this embodiment, the decorative cover (15) is produced as integrated with the support (6).

In another embodiment of the present invention, the support (6) is detachable from the lateral surface of the brewing chamber (3).

In the coffee machine (1) of the present invention, by providing that only plug (9) among the components of the valve (5) is disposed in the brewing chamber (3) and that the coffee is transferred via the stem (8) connected to the plug (9), the coffee is transferred together with its foam into the cup. Moreover, cleaning of the brewing chamber (3) and the valve (5) is facilitated. By means of the present invention, the coffee is prevented from splashing outside the cup during the transfer of the coffee by means of components such as the flow regulator (14), the pendant (12) and the barrier (13).

## Claims

1. A coffee machine (1) **comprising** a body (2), a brewing chamber (3) disposed within the body (2) and wherein the coffee is mixed with water and brewed, a pouring port (4) disposed at the base of the brewing chamber (3), and a valve (5) having a support (6) that is fixed on the external lateral surface of the brewing chamber (3) **characterized in that** the valve further comprises a piston (7) that is borne in the support (6) so as to move in the vertical direction, a stem (8) that is connected to the lower end of the piston (7) and that extends perpendicularly from the pouring port (4) therein and a plug (9) that is disposed on the end of the stem (8) in the brewing chamber (3) and that is seated onto the pouring port (4) during the brewing process, the valve (5) providing the opening of the pouring port (4) and the decanting of the brewed coffee by moving the plug (9) upward with the piston (7) and the stem (8) connected to the piston (3) by means of an actuator (A) at the end of the brewing process and a connection arm (11) that provides the connection between the lower end of the piston (7) and the stem (8) and a pendant (12) that extends downward in the direction of the flow at the juncture of the stem (8) and the connection arm (11) and provides smooth flow of the liquid.

2. A coffee machine (1) as in Claim 1, **characterized by** a spring (10) with one end connected to the piston (7) and the other end to the support (6), that enables the plug (9) to apply pressure and be seated onto the pouring port (4) throughout the brewing process.

3. A coffee machine (1) as in any one of the above claims, **characterized by** the plug (9) in the form of a sphere, produced from silicon.

4. A coffee machine (1) as in any one of the claims 1 to 3, **characterized by** at least one barrier (13) that is disposed on the connection arm (11) and that extends in the vertical direction so as to prevent the liquid from moving on the connection arm (11).

5. A coffee machine (1) as in any one of the above claims, **characterized by** a flow regulator (14) in the form of a plate, that partly extends along the stem (8).

6. A coffee machine (1) as in any one of the claims 1 to 5, **characterized by** the curved connection arm (11).

7. A coffee machine (1) as in any one of the above claims, **characterized by** at least one decorative cover (15) that is disposed in front of the support (6) and that prevents the piston (7) and the stem (8) from being seen.

8. A coffee machine (1) as in any one of the above claims, **characterized by** the support (6) that is detachable from the lateral surface of the brewing chamber (3).

## Patentansprüche

1. Eine Kaffeemaschine (1) **umfasst** einen Körper (2), eine Brühkammer (3), welche innerhalb des Körpers (2) angeordnet ist und der darin der Kaffee mit Wasser gemischt und gebrüht wird, eine Ausgießöffnung (4), die an der Basis der Brühkammer (3) angeordnet ist und ein Ventil (5) mit einem Träger (6), welches an der Außenfläche der Brühkammer (3) befestigt ist; **gekennzeichnet ist es dadurch**, dass das Ventil darüber hinaus einen Kolben (7) besitzt, der in dem Träger (6) getragen ist, um sich in vertikaler Richtung zu bewegen, einen Schaft (8), der mit dem unteren Ende des Kolbens (7) verbunden ist und senkrecht von der Ausgießöffnung (4) steht; einen Stopfen (9), der am Ende des Schaftes (8) in der Brühkammer (3) angeordnet ist und während des Brühvorgangs auf der Ausgießöffnung (4) sitzt, wobei das Ventil (5) die Öffnung der Ausgießöffnung (4) und das Dekantieren des gebrühten Kaffees durch das Bewegen des Stopfens (9) nach oben mit dem Kolben (7) und dem verbunden Schaft (8) bereitstellt; am Ende des Brühvorgangs wird mittels eines Stellglieds (A) und eines Verbindungsarms (11), welches die Verbindung zwischen dem unteren Ende des Kolbens (7) und dem Schaft (8) und einem sich ausdehnenden Anhänger (12) in Strömrichtung herstellt und nach unten an der Verbindungsstelle des Schaftes (8) und des Verbindungsarms (11) nach unten führt und dafür sorgt, das sein gleichmäßiger Fluss der Flüssigkeit stattfindet.

2. Eine Kaffeemaschine (1), wie in Anspruch 1 aufgeführt, **ist dadurch gekennzeichnet, dass** eine Feder (10), dessen eines Ende mit dem Kolben (7) und das andere Ende mit dem Träger (6) verbunden ist und diese es dem Stopfen (9) ermöglicht, Druck während des gesamten Brühvorgangs auf die Ausgießöffnung (4) zu setzen.

3. Eine Kaffeemaschine (1), wie in einem der vorherigen Ansprüche aufgeführt, ist durch den Stopfen (9) **gekennzeichnet**, der in Form einer Kugel aus dem Material Silizium hergestellt ist.

4. Eine Kaffeemaschine (1), wir in den Ansprüchen 1 bis 3 aufgeführt, **ist dadurch gekennzeichnet, dass** mindestens eine Barriere (13) an dem Verbindungsarm (11) angeordnet ist und sich in vertikaler Richtung erstreckt, um die Flüssigkeit daran zu hindern, sich auf dem Verbindungsarm (11) zu bewegen.

5. Eine Kaffeemaschine (1), wie in einem der vorherigen Ansprüche aufgeführt, **ist dadurch gekennzeichnet, dass** sein Strömungsregler (14) in Form einer Platte sich teileweise entlang des Stiels (8) erstreckt.

6. Eine Kaffeemaschine (1), wie in den Ansprüchen 1 bis 5 aufgeführt, ist durch den gebogenen Verbindungsarm (11) **gekennzeichnet**.

7. Eine Kaffeemaschine (1), wie in einem der vorherigen Ansprüche aufgeführt, **ist dadurch gekennzeichnet, dass** mindestens eine dekorative Abdeckung (15), die vor dem Träger (6) angeordnet ist und es verhindert, dass der Kolben (7) und der Schaft gesehen werden.

8. Eine Kaffeemaschine (1), wie in einem der vorherigen Ansprüche aufgeführt, **ist dadurch gekennzeichnet, dass** der Träger (6) von der seitlichen Oberfläche der Brühkammer (3) abnehmbar ist.

## Revendications

1. Une machine à café (1) **comprenant** un corps (2), une chambre de percolation (3) disposée à l'intérieur du corps (2) et dans laquelle le café est mélangé avec de l'eau et infusé, un orifice de versement (4) disposé au fond de la chambre de brassage (3), et une soupape (5) ayant un support (6) qui est fixé sur la surface latérale extérieure de la chambre de percolation (3), est **caractérisé en ce que** la soupape comprend en outre un piston (7) qui est supporté dans le support (6) de manière à se déplacer dans la direction verticale, une tige (8) qui est reliée à l'extrémité inférieure du piston (7) et qui s'étend perpendiculairement à l'orifice de coulée (4) et un bouchon (9) qui est disposé sur l'extrémité de la tige (8) dans la chambre de percolation (3) et qui est fixé à l'orifice de coulée (4) pendant le procédé de percolation, la soupape (5) assurant l'ouverture de l'orifice de versement (4) et la décantation du café infusé en déplaçant le bouchon (9) vers le haut avec le piston (7) et la tige (8) reliée au piston (3) au moyen d'un actionneur (A) à la fin du processus de préparation et un bras de raccordement (11) qui assure la liaison entre l'extrémité inférieure du piston (7) et la tige (8) et une suspension (12) qui s'étend vers le bas dans la direction de l'écoulement à la jonction de la tige (8) et du bras de liaison (11) et assure un écoulement régulier du liquide.

2. Une machine à café (1) selon la déclaration 1, **est caractérisée par** un ressort (10) dont une extrémité est reliée au piston (7) et l'autre extrémité au support (6), qui permet au bouchon (9) d'appliquer une pression et d'être placé sur l'orifice de coulée (4) pendant le processus de percolation.

3. Une machine à café (1) comme dans l'une quelconque des déclarations ci-dessus, **est caractérisée par** le bouchon (9) en forme de sphère, fabriqué en Silicone.

4. Une machine à café (1) comme dans l'une quelconque des déclarations 1 à 3, **est caractérisée par** au moins un obturateur (13) qui est disposé sur le bras de connexion (11) et qui s'étend dans la direction verticale afin d'empêcher le liquide de se déplacer sur le bras de connexion (11).

5. Une machine à café (1) comme dans l'une quelconque des déclarations ci-dessus, **est caractérisée par** un régulateur de débit (14) sous la forme d'une plaque, qui s'étend partiellement le long de la tige (8).

6. Une machine à café (1) comme dans l'une quelconque des déclarations 1 à 5, **est caractérisée par** le bras de connexion courbe (11).

7. Une machine à café (1) comme dans l'une quelconque des déclarations ci-dessus, **est caractérisée par** au moins un couvercle décoratif (15) qui est disposé devant le support (6) et qui empêche le piston (7) et la tige (8) d'être visibles.

8. Une machine à café (1) comme dans l'une quelconque des déclarations ci-dessus, **est caractérisée par** le support (6) qui est détachable de la surface latérale de la chambre de percolation (3).
